# FASCICULE DE BREVET EUROPEEN

(11) **EP 2 896 748 B1**
(45) Date de publication et mention de la délivrance du brevet: **13.07.2016**
(21) Numéro de dépôt: 14193840.7
(22) Date de dépôt: 19.11.2014
(51) Int. Cl.: E01H 1/08, B60P 1/16

(54) **Aspiratrice excavatrice**
Saugbagger
Suction excavator

(30) Priorité: 09.01.2014 FR 1450142
(43) Date de publication de la demande: 22.07.2015
(73) Titulaire: Rivard, 49640 Daumeray (FR)
(72) Inventeur: Ollivier, Michel, 49220 Brain sur Longuenée (FR); Pessard, Mathieu, 72300 NOTRE DAME DU PE (FR)
(74) Mandataire: Cabinet HERRBURGER

(56) Documents cités:
- GB-A- 2 441 040
- US-A- 1 560 612
- US-A- 3 490 090

## Description

La présente invention a pour objet une aspiratrice excavatrice.

Un tel engin de travaux publics est classiquement constitué par un véhicule porteur sur lequel sont montés un compartiment machine équipé d'organes de pompage de déchets et de gravats ainsi qu'une cuve subdivisée par une cloison de séparation en un compartiment filtre adjacent au compartiment machine dans lequel est montée une garniture filtrante comportant une série de filtres à poussière, et en un compartiment de stockage des déchets et des gravats aspirés équipé à sa partie arrière d'un bras aspirateur articulé relié à un circuit d'aspiration branché sur le côté aspiration des organes de pompage.

La cuve d'une telle aspiratrice excavatrice peut basculer transversalement autour d'un axe de basculement horizontal essentiellement parallèle à son axe longitudinal médian entre d'une part une position redressée ou position de travail dans laquelle les déchets et les gravats peuvent être aspirés et transférés dans le compartiment de stockage, et d'autre part une position basculée ou position de vidange.

Les aspiratrices excavatrices de type susmentionné peuvent avantageusement être utilisées dans le cadre de nombreuses activités telles que le creusement de tranchées sur routes ou dans des zones urbaines sans risque de détérioration des canalisations souterraines, ou pour aspirer des gravats sur des terrasses ou en partie haute de bâtiments, ou encore pour effectuer des opérations de déneigement.

La cuve des aspiratrices excavatrices actuellement disponibles sur le marché est fermée à sa partie supérieure par un couvercle de grande dimension articulé sur celle-ci qui s'étend au-dessus de la totalité du compartiment de stockage et du compartiment filtre.

Le bras aspirateur articulé est directement raccordé sur ce grand couvercle qui renferme la majeure partie du circuit d'aspiration.

Par suite, pour effectuer la vidange des déchets et des gravats rassemblés dans le compartiment de stockage et sous les filtres il est nécessaire de soulever le grand couvercle avant de basculer la cuve de façon à dégager la partie supérieure du compartiment de stockage et du compartiment filtre.

Cette nécessité implique de pouvoir disposer au-dessus du véhicule d'une hauteur importante qui n'est pas toujours disponible, par exemple en présence de conducteurs électriques ou de ligne de tramways.

De plus, des poussières entrainées avec l'air aspiré peuvent être retenues sur le couvercle puis retomber sur la cuve et sur la garniture filtrante, qui n'est pas protégée à ce niveau, côté air épuré.

Un autre inconvénient des aspiratrices excavatrices de ce type est lié au fait que la garniture filtrante n'est que difficilement accessible et que les opérations de maintenance et de remplacement des filtres obligent à soulever le grand couvercle, ce qui est peu pratique.

Il est également très difficile d'effectuer les opérations de remplacement et de nettoyage des parties intérieures du couvercle et notamment de l'orifice d'entrée du canal de pompage.

La présente invention a pour objet de proposer une aspiratrice excavatrice permettant de remédier à ces inconvénients.

Selon l'invention, la partie supérieure de la cuve de cette aspiratrice excavatrice est subdivisée longitudinalement en une partie fermée, au-dessous de laquelle est monté, au niveau du compartiment de stockage, un tronçon longitudinal du circuit d'aspiration relié au bras aspirateur articulé, et en une partie ouverte obturée par un couvercle longitudinal articulé qui est ouvert lors du transfert de la cuve de la position de travail à la position de vidange pour permettre l'évacuation des déchets et des gravats rassemblés dans le compartiment de stockage ainsi que des poussières rassemblées dans le compartiment filtre.

Selon l'invention, la cuve présente avantageusement en partie basse une forme arrondie permettant de faciliter la vidange des déchets et les gravats et d'améliorer sa tenue au vide.

L'aspiratrice excavatrice qui fait l'objet de l'invention se distingue ainsi des engins de ce type actuellement proposés sur le marché par le remplacement du grand couvercle devant être soulevé avant le basculement de la cuve par un petit couvercle longitudinal s'étendant le long d'une partie fermée sur la totalité de la longueur de la cuve, c'est-à-dire à la partie supérieure du compartiment de stockage et du compartiment filtre.

A ce couvercle longitudinal qui est ouvert lorsque l'on bascule la cuve, est adjoint un couvercle de protection articulé qui recouvre la garniture filtrante et reste fermé lors du basculement de la cuve de la position de travail vers la position de vidange.

Ce couvercle de protection qui s'étend latéralement au couvercle longitudinal n'est ouvert que lors des opérations de manutention et de remplacement des filtres qui sont ainsi largement facilitées, ce d'autant plus qu'il peut avantageusement être prévu, pour faciliter l'accès à la garniture filtrante une plate-forme sécurisée notamment constituée d'un caillebotis fixé à la partie avant de la cuve et équipée d'un garde-corps constitué par la partie arrière du compartiment machine.

Il est à noter que dans le cadre de cet exposé, les termes haut, bas, inférieur, supérieur... se rapportent à l'aspiratrice excavatrice redressée en position de travail tandis que les termes avant, arrière doivent être compris dans le sens allant de la cabine du conducteur du véhicule porteur vers le bras aspirateur articulé.

Une autre différence essentielle existant entre l'aspiratrice excavatrice présentement revendiquée et les engins du même type actuellement proposés sur le marché est liée au fait que le bras aspirateur articulé n'est pas monté sur le couvercle, mais directement sur la cuve, en partie haute de celle-ci au niveau de la partie arrière du compartiment de stockage au-dessous de la partie fixe.

Du fait de ce montage, il est nécessaire d'équiper l'aspiratrice excavatrice conforme à l'invention d'organes de connexion permettant de désaccoupler la cuve et le circuit d'aspiration du bras aspirateur articulé et des organes de pompage montés dans le compartiment machine lors du déplacement de cette cuve de la position de travail vers la position de vidange, et de les réaccoupler lors du déplacement inverse pour permettre l'aspiration de déchets et de gravats.

De tels organes de connexion présentent l'avantage de permettre de libérer l'orifice de sortie des déchets et des gravats du bras aspirateur articulé et l'orifice d'entrée de ces déchets et de ces gravats dans la cuve lorsque celle-ci est basculée en position de vidange de façon à pouvoir nettoyer ces orifices qui sont fréquemment obstrués par de la terre grasse entrainée avec l'air aspiré.

Pour permettre de visualiser l'état de colmatage des orifices susmentionnés et de faciliter leur nettoyage lorsqu'ils sont désaccouplés une passerelle facilitant l'accès à ces orifices peut avantageusement être montée sur la cuve, à la partie arrière du compartiment de stockage.

Selon une autre caractéristique de l'invention, le tronçon longitudinal du circuit d'aspiration situé au-dessous de la partie fermée au niveau du compartiment de stockage comporte un canal de pompage des déchets et des gravats branché sur le bras aspirateur articulé ainsi qu'un canal d'aspiration d'air branché sur le côté aspiration des organes de pompage.

Ce canal d'aspiration d'air est monté latéralement au voisinage du canal de pompage des déchets et des gravats parallèlement à celui-ci et comporte une ouverture de passage de l'air à son extrémité arrière.

L'air pénètre dans le compartiment de stockage de la cuve avec les déchets et les gravats sont précipités à la partie inférieure de ce compartiment ; l'air est parallèlement aspiré vers le haut et pénètre dans le canal d'aspiration d'air par l'ouverture de passage située à l'extrémité arrière de ce canal en entrainant les poussières fines.

Selon une caractéristique préférentielle de l'invention, le canal d'aspiration d'air a une section essentiellement en forme de U et comporte une branche centrale ainsi que deux branches latérales dont l'une est fixée au couvercle longitudinal à son extrémité.

Par suite, lorsque le couvercle longitudinal est ouvert, la branche latérale du canal d'aspiration d'air ainsi fixée à ce couvercle est entrainée avec lui pour dégager ce canal, et les poussières entrainées avec l'air aspiré peuvent être évacuées lors du basculement de la cuve en position de vidange.

Selon une autre caractéristique de l'invention, le canal d'aspiration d'air se prolonge dans le compartiment filtre par une conduite d'aspiration s'étendant de haut en bas et latéralement en avant de la cloison séparant le compartiment de stockage du compartiment filtre le long de la garniture filtrante, puis au travers de cette garniture et à la sortie de celle-ci par une chambre de collecte branchée sur le côté aspiration des organes de pompage.

Il est à noter que le compartiment filtre peut avantageusement être équipé, en avant de la cloison de séparation, d'une cloison déflectrice du flux d'air.

L'air sortant du canal d'aspiration d'air par une ouverture de sortie et empruntant la conduite d'aspiration passe ainsi au-dessous et sur les côtés de cette cloison déflectrice.

Les filtres équipant la garniture filtrante sont donc parcourus de bas en haut par l'air aspiré et l'air épuré débarrassé des poussières sort de la cuve en partie haute à l'avant de celle-ci, pour être transféré dans le compartiment machine vers le côté aspiration des organes de pompage.

Les poussières qui sont entrainées dans la conduite d'aspiration par l'air aspiré se rassemblent quant à elles dans une chambre d'accumulation des poussières située au-dessous de la garniture filtrante.

Selon une caractéristique particulièrement avantageuse de l'invention, cette chambre d'accumulation des poussières se prolonge vers le haut le long de la garniture filtrante par un couloir de vidange s'ouvrant à sa partie supérieure par une ouverture de vidange des poussières qui est située au droit du prolongement du couvercle longitudinal au niveau du compartiment filtre.

Par suite, après ouverture de ce couvercle longitudinal et basculement de la cuve en position de vidange, les poussières rassemblées dans la chambre d'accumulation des poussières sont évacuées de la cuve avec les déchets et les gravats rassemblés à la partie inférieure du compartiment de stockage.

Selon une autre caractéristique de l'invention, le couvercle de protection recouvrant la garniture filtrante est équipé d'organes de décolmatage des filtres par de l'air comprimé circulant à contre courant fourni par un compresseur d'air.

Ce décolmatage peut avantageusement être effectué par intermittence selon un cycle automatisé.

Il est à noter que dans la position de travail tout comme dans la position de vidange la cuve repose sur des béquilles télescopiques équipées à leur partie inférieure de vérins d'appui au sol de façon à permettre de soulager les roues du véhicule porteur.

Ces béquilles sont avantageusement au nombre de trois, à savoir :
- une à l'arrière, côté droit,
- une à l'arrière, côté gauche,
- une entre le compartiment machine 2 et la cuve 3 côté axe de basculement de la cuve.

Lorsque le bras aspirateur est utilisé les deux béquilles arrière sont abaissées.

Lors de la vidange, les deux béquilles latérales sont abaissées.

Selon une autre caractéristique de l'invention, la béquille arrière située à l'arrière côté droit et supportant le bras articulé est équipée à sa partie supérieure d'un axe soudé sur celle-ci et venant s'insérer à la fin du basculement de la cuve entre la position de vidange et la position de travail dans des pièces d'accrochage fixées à la partie arrière de cette cuve.

Cet accouplement permet de rendre la béquille arrière solidaire de la cuve pour éviter qu'elle fléchisse lors de l'utilisation du bras aspirateur articulé.

Selon une autre caractéristique de l'invention, un organe de connexion mobile en rotation autour d'un axe et commandé par un vérin permet de déconnecter rapidement le canal de pompage des déchets et de gravats et le bras articulé pour permettre le basculement de la cuve.

Les caractéristiques de l'aspiratrice excavatrice qui fait l'objet de l'invention seront décrites plus en détail en se référant aux dessins non limitatifs annexés dans lesquels :
- la figure 1 est une vue en perspective de l'aspiratrice excavatrice,
- la figure 2 est une vue en perspective de l'aspiratrice excavatrice sous un autre angle, le couvercle de protection des filtres étant ouvert et la partie supérieure du compartiment machine ayant été enlevée,
- la figure 3 est une vue en perspective de la cuve de l'aspiratrice excavatrice en position de vidange représentant la partie supérieure de cette cuve, couvercle longitudinal ouvert,
- la figure 4 est une coupe partielle de la cuve de l'aspiratrice excavatrice représentant le canal de pompage des déchets et des gravats,
- la figure 5 est une vue en perspective similaire à la figure 4 mais représentant le canal d'aspiration d'air,
- la figure 6 est une coupe partielle du compartiment de stockage au niveau de la partie arrière de ce compartiment,
- la figure 7 est une coupe partielle de la partie avant de la cuve de l'aspiratrice excavatrice, au niveau du compartiment filtre,
- la figure 8 est un détail représentant l'accrochage de la béquille arrière avec la cuve.

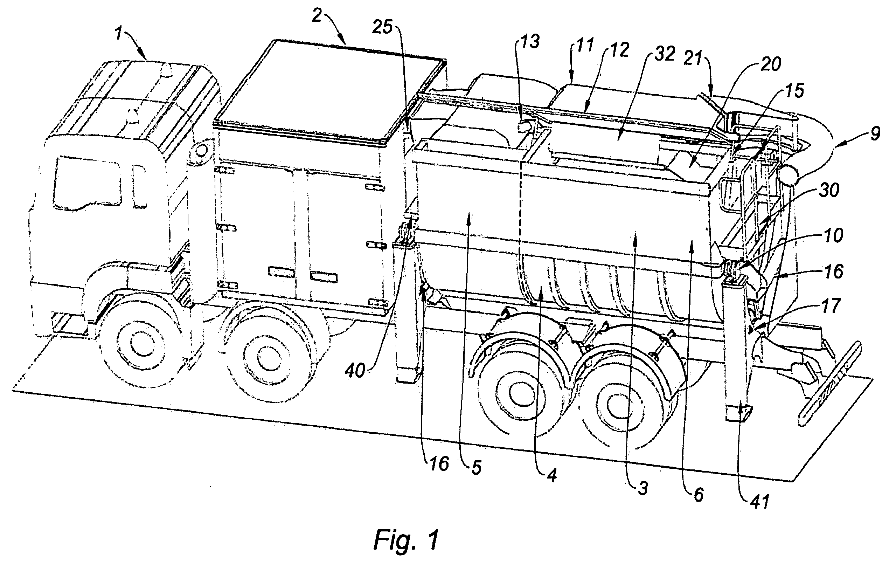

Selon la figure 1, l'aspiratrice excavatrice est constituée par un véhicule porteur 1 sur lequel sont montés en allant de l'avant à l'arrière de ce véhicule un compartiment machine 2 équipé d'organes de pompage des déchets et des gravats qui ne sont pas représentés sur les figures ainsi qu'une cuve 3 dont la partie basse 4 présente une forme arrondie.

La cuve 3 est subdivisée par une cloison de séparation 28 en allant de sa partie avant à sa partie arrière en un compartiment filtre 5 adjacent au compartiment machine 2 et en un compartiment de stockage 6 des déchets et des gravats aspirés.

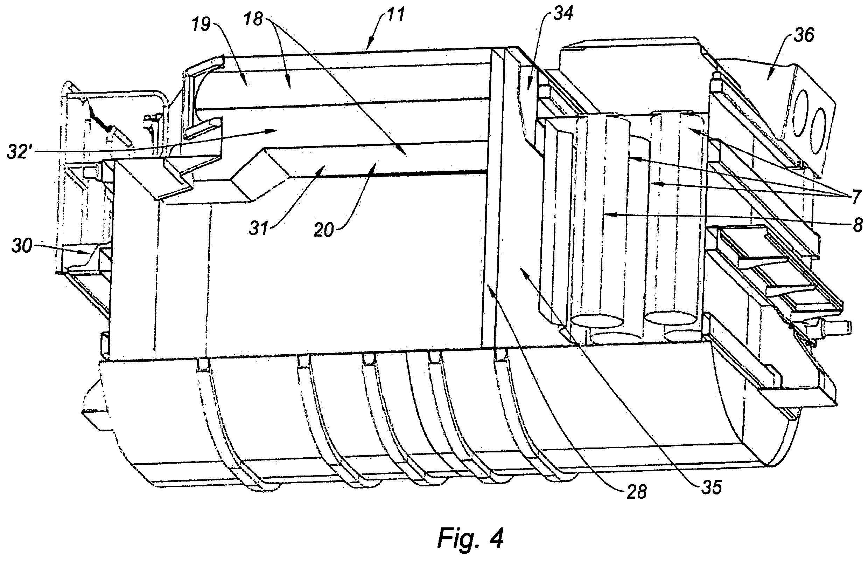

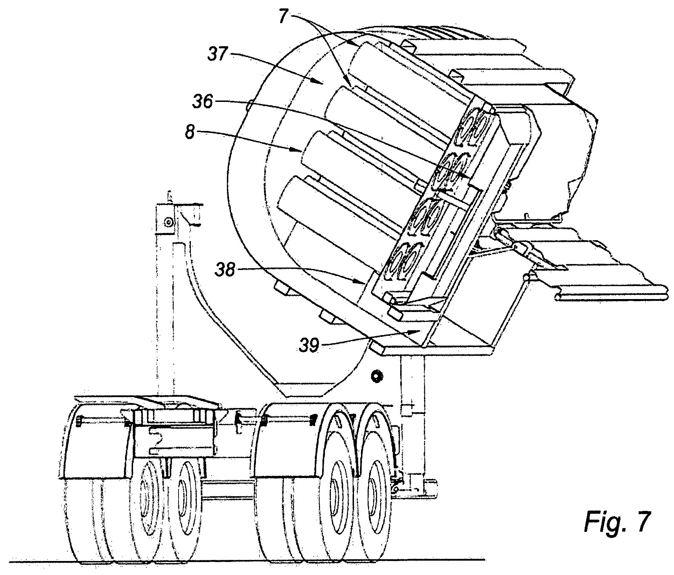

Le compartiment filtre 5 est équipé à sa partie interne d'une garniture filtrante 7 comportant une série de filtres 8 qui sont visibles sur les figures 4 et 7.

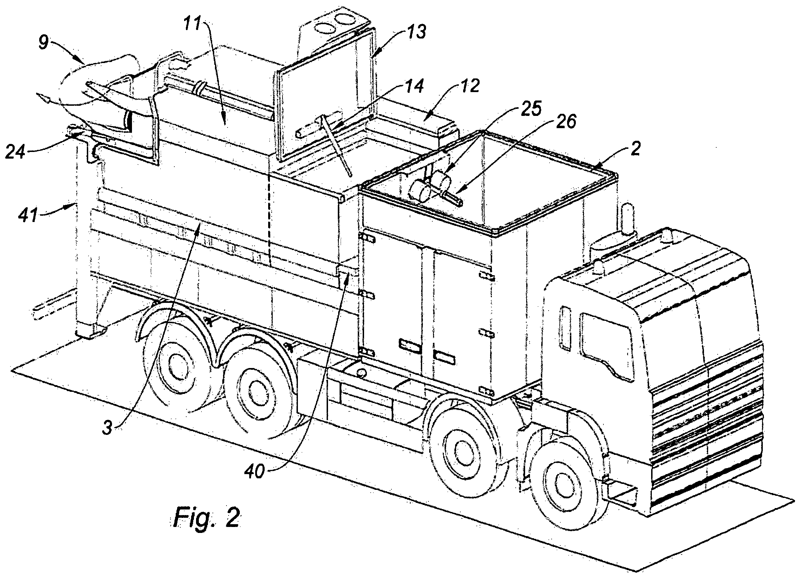

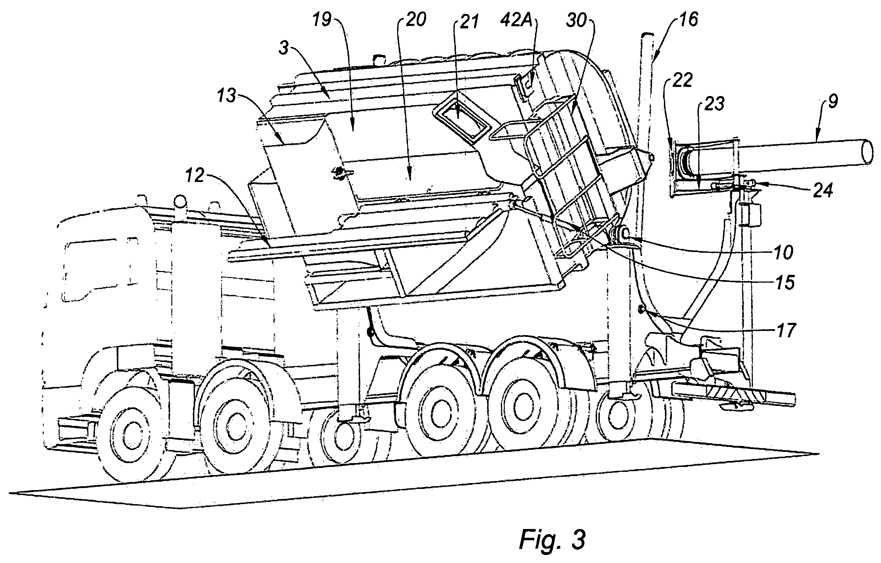

Le compartiment de stockage 6 est équipé à sa partie arrière d'un bras aspirateur articulé 9 représenté schématiquement sur les figures 1 et 2 qui est également visible sur la figure 3.

Ce bras articulé 9 est relié à un circuit d'aspiration branché sur le côté aspiration des organes de pompage montés dans le compartiment machine 2.

Les caractéristiques de ce circuit d'aspiration seront décrites plus en détail dans la suite de cet exposé.

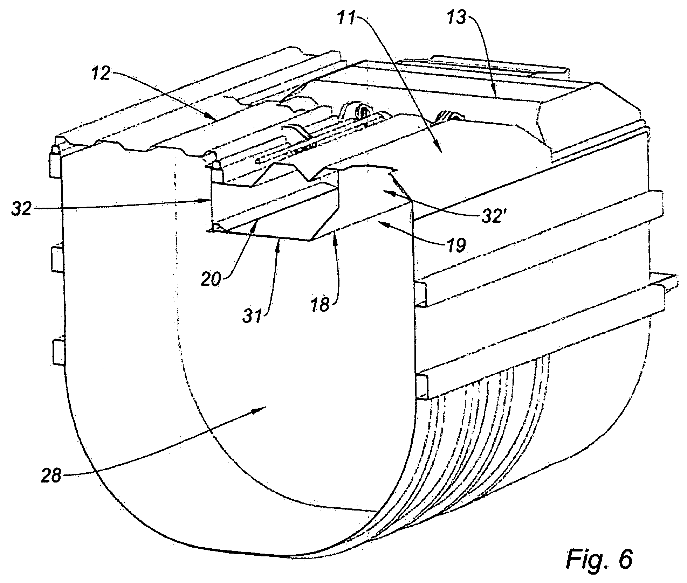

La cuve 3 peut basculer transversalement autour d'un axe de basculement latéral horizontal 10 parallèle à son axe longitudinal médian entre une position redressée ou position de travail représentée sur les figures 1, 2, 4, 5 et 6 dans laquelle des déchets et des gravats peuvent être aspirés et transférés dans le compartiment de stockage 6 et une position basculée ou position de vidange représentée sur les figures 3 et 7.

Le basculement de la cuve 3 autour de l'axe 10 entre la position de travail et la position de vidange est commandé par des vérins à double effet 16 dont les axes d'accrochage 17 sont implantés à la verticale des paliers de l'axe de basculement 10.

La partie supérieure de la cuve 3 est subdivisée longitudinalement en une partie fixe fermée 11 et une partie ouverte obturée par un couvercle longitudinal articulé 12 qui s'étend sur toute la longueur de cette cuve au niveau du compartiment filtre 5 et au niveau du compartiment de stockage 6.

Ce couvercle longitudinal 12 est ouvert lors du transfert de la cuve 3 de la position de travail à la position de vidange pour permettre l'évacuation des déchets et des gravats ainsi que des poussières comme représenté sur la figure 3.

Cette ouverture du couvercle longitudinal 12 est commandée par des vérins 15.

Selon les figures 1, 2 et 3, le compartiment filtre 5 est en outre ouvert à sa partie supérieure au droit de la garniture filtrante 7 et équipé à ce niveau d'un couvercle de protection articulé 13 dont le déplacement est commandé par un vérin 14.

Ce couvercle de protection 13, qui s'étend latéralement au prolongement du couvercle longitudinal 12 au niveau du compartiment filtre 5, reste fermé lors du basculement de la cuve 3 de la position de travail à la position de vidange comme représenté sur la figure 3.

Selon les figures 4, 5 et 6, un tronçon longitudinal 18 du circuit d'aspiration est monté en partie haute du compartiment de stockage 6 au-dessous de la partie fermée 11 de la cuve 3.

Ce tronçon longitudinal 18 comporte un canal de pompage des déchets et des gravats 19 ainsi qu'un canal d'aspiration d'air 20 monté latéralement au voisinage de ce canal de pompage des déchets et des gravats 19 parallèlement à ce canal.

Selon la figure 3, le canal de pompage des déchets et des gravats 19 débouche à la partie arrière de la cuve 3 par un orifice d'entrée dans cette cuve 21 qui est branché sur l'orifice de sortie 22 du bras aspirateur articulé 9.

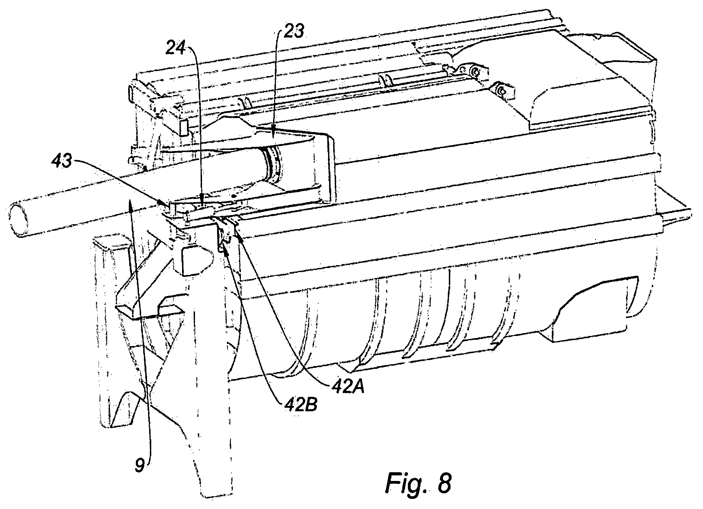

Selon la figure 8, un organe de connexion 23 mobile en rotation autour d'un axe 43 et commandé par un vérin 24 permet de désaccoupler les orifices 21 et 22 et par suite de déconnecter rapidement le canal de pompage des déchets et des gravats 19 et le bras articulé 9 pour permettre le basculement de la cuve 3.

Une passerelle 30 montée à la partie arrière de la cuve 3 qui est visible sur les figures 1, 3 et 4 permet, lorsque l'orifice d'entrée 21 du canal de pompage des déchets et des gravats 19 et l'orifice de sortie 22 du bras aspirateur articulé 9 sont dégagés de visualiser les déchets contenus dans le compartiment de stockage 6 et de débarrasser ces orifices de la terre et des matériaux collants ayant pu s'y agglomérer.

De même et là encore pour permettre le basculement de la cuve 3 entre la position de travail et la position de vidange, il est prévu à l'avant de cette cuve des organes de connexion 25 commandés par un vérin 26 qui permettent de désaccoupler le circuit d'aspiration et les organes de pompage montés dans le compartiment machine 2.

Selon les figures 4, 5 et 6, le canal d'aspiration d'air 20 qui est branché sur le côté aspiration des organes de pompage montés dans le compartiment machine 2 a une section en forme de U et comporte une branche centrale 31 ainsi que deux branches latérales 32, 32' dont l'une 32' est adjacente au canal de pompage des déchets et des gravats 19.

Le canal d'aspiration d'air 20 comporte une ouverture de passage de l'air 33 à son extrémité arrière.

L'air pénètre dans le compartiment de stockage 6 de la cuve 3 avec les déchets par l'orifice d'entrée 21 du canal de pompage 19 et les gravats aspirés sont précipités à la partie inférieure de ce compartiment de stockage 6.

L'air et les particules fines renfermés dans les déchets pénètrent dans le canal d'aspiration d'air 20 par l'ouverture de passage 33 avant de resortir de ce canal 20 dans le compartiment filtre 5 par une ouverture 34 visible sur la figure 4.

Selon les figures 1, 5 et 6, la branche latérale 32 opposée au canal de pompage des déchets et des gravats 19 du canal d'aspiration d'air 20 est fixée au couvercle longitudinal 12 à son extrémité de sorte que ce canal soit dégagé lors de l'ouverture du couvercle longitudinal 12 comme représenté sur la figure 1 pour permettre l'évacuation des poussières ayant pu être entraînées avec l'air aspiré lors du basculement de la cuve 3.

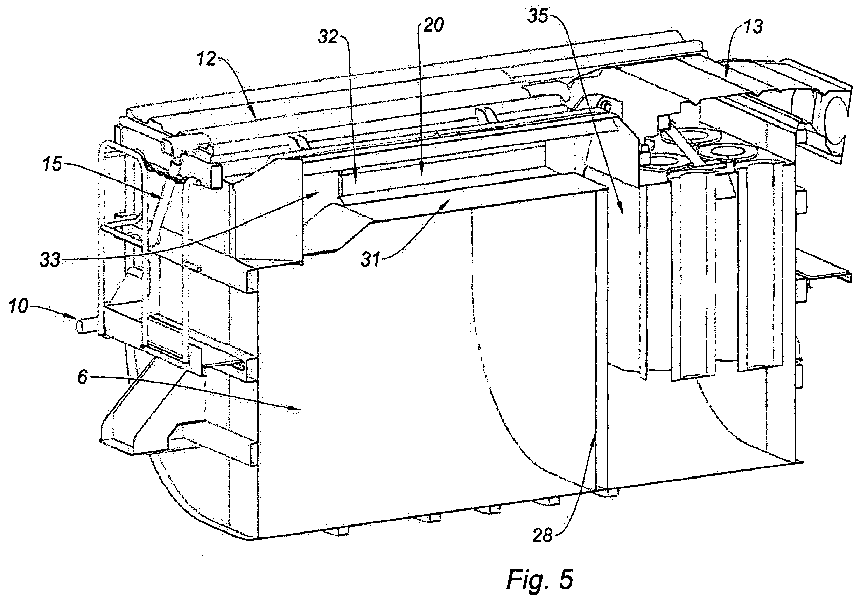

Selon les figures 4 et 5, l'air chargé de poussières qui pénètre dans le compartiment filtre 5 par l'ouverture de sortie 34 du canal d'aspiration d'air 20 est transféré dans une conduite d'aspiration 35 prolongeant ce canal d'aspiration 20 au-delà de la cloison de séparation 28 du compartiment de stockage 6 et du compartiment filtre 5.

Cette conduite d'aspiration 35 s'étend de haut en bas à l'avant de la cloison de séparation 28.

A la sortie de la conduite d'aspiration 35, l'air circule latéralement et remonte vers la partie haute de la cuve 3 au travers des filtres 8 équipant la garniture filtrante 7, puis l'air épuré débarrassé des poussières est transféré dans une chambre de collecte 36 visible sur la figure 7 qui est branchée sur le côté aspiration des organes de pompage montés dans le compartiment machine 2.

En amont de la garniture filtrante 7, les poussières entrainées avec l'air aspiré se rassemblent dans une chambre d'accumulation des poussières 37 visible sur les figures 5 et 7 qui est située au-dessous de cette garniture filtrante 7.

Selon la figure 7, la chambre d'accumulation des poussières 37 se prolonge vers le haut le long de la garniture filtrante 7 par un couloir de vidange 38 s'ouvrant à sa partie supérieure par une ouverture de vidange 39 également visible sur la figure 3.

Cette ouverture de vidange 39 permet l'évacuation des poussières renfermées dans la chambre d'accumulation 37 lorsque la cuve 3 est transférée en position de vidange, comme représenté sur la figure 3.

Comme représenté en particulier sur la figure 3 le couvercle articulé 12 se prolonge au niveau du compartiment filtre 5 jusqu'au droit de l'ouverture de vidange des poussières 39 de façon à l'obturer en position de travail.

Ce prolongement du couvercle longitudinal 12 est directement adjacent au couvercle de protection 13 fermant la garniture filtrante 7.

Comme il a déjà été indiqué, le couvercle de protection 13 est fermé aussi bien en position de travail qu'en position de vidange et n'est ouvert que pour permettre la maintenance de la garniture filtrante 7 et le remplacement des filtres 8 équipant cette garniture.

Selon les figures 1 et 2, l'accès à la garniture filtrante 7 est facilité par une plate-forme sécurisée 40 constituée par un caillebotis fixé sur la cuve 3 et par un garde-corps défini par l'extrémité arrière du compartiment machine 2.

Par ailleurs, dans la position de travail et dans la position de vidange, et selon les figures 1 et 2, le véhicule porteur 1 repose sur des béquilles télescopiques 41 équipées à leur partie inférieure de vérins d'appui au sol non représentés sur les figures qui permettent de soulager les roues.

Ces béquilles 41 sont au nombre de trois, à savoir :
- une à l'arrière, côté droit,
- une à l'arrière, côté gauche,
- une entre le compartiment machine 2 et la cuve 3 côté axe de basculement de la cuve.

Selon la figure 8, la cuve 3 est équipée à sa partie arrière de pièces d'accrochage 42A dans lesquelles viennent respectivement s'insérer un axe 42B solidaire de la béquille arrière 41 située à l'arrière côté droit et supportant le bras articulé 9 à la fin du basculement de la cuve 3 entre la position de vidange et la position de travail.

Cet accouplement permet de rendre la béquille arrière 41 solidaire de la cuve 3 pour éviter qu'elle fléchisse lors de l'utilisation du bras aspirateur articulé 9.

### NOMENCLATURE

- 1: Véhicule porteur
- 2: Compartiment machine
- 3: Cuve
- 4: Partie basse de la cuve
- 5: Compartiment filtre
- 6: Compartiment de stockage
- 7: Garniture filtrante
- 8: Filtres
- 9: Bras aspirateur articulé
- 10: Axe de basculement de la cuve
- 11: Partie fixe fermée
- 12: Couvercle longitudinal
- 13: Couvercle de protection
- 14: Vérin
- 15: Vérins
- 16: Vérins à double effet
- 17: Axes d'accrochage
- 18: Tronçon longitudinal du circuit d'aspiration
- 19: Canal de pompage des déchets et des gravats
- 20: Canal d'aspiration d'air
- 21: Orifice d'entrée du canal de pompage
- 22: Orifice de sortie du bras aspirateur articulé
- 23: Organe de connexion
- 24: Vérin
- 25: Organe de connexion
- 26: Vérin
- 28: Cloison de séparation
- 30: Passerelle
- 31: Branche centrale du canal d'aspiration d'air
- 32. 32': Branches latérales du canal d'aspiration d'air
- 33: Ouverture de passage de l'air
- 34: Ouverture de sortie du canal d'aspiration d'air
- 35: Conduite d'aspiration
- 36: Chambre de collecte
- 37: Chambre d'accumulation des poussières
- 38: Coiiloir de vidange
- 39: Ouverture de vidange des poussières
- 40: Plate-forme sécurisée
- 41: Béquilles
- 42A: Pièces d'accrochage solidaires de la cuve
- 42B: Axes solidaires des béquilles arrière
- 43: Axe

## Revendications

1. Aspiratrice excavatrice constituée par un véhicule porteur (1) sur lequel sont montés un compartiment machine (2) équipé d'organes de pompage de déchets et de gravats ainsi qu'une cuve (3) subdivisée en un compartiment filtre (5) adjacent au compartiment machine (2) dans lequel est montée une garniture filtrante (7) et en un compartiment de stockage des déchets et des gravats aspirés (6) équipé à sa partie arrière d'un bras aspirateur articulé (9) relié à un circuit d'aspiration branché sur le côté aspiration des organes de pompage, cette cuve (3) pouvant basculer transversalement autour d'un axe de basculement horizontal (10) essentiellement parallèle à son axe longitudinal médian entre d'une part une position redressée ou position de travail dans laquelle les déchets et les gravats peuvent être aspirés et transférés dans le compartiment de stockage (6), et d'autre part une position basculée ou position de vidange, **caractérisée en ce que**
la partie supérieure de la cuve (3) est subdivisée longitudinalement en une partie fermée (11) au dessous de laquelle est monté, au niveau du compartiment de stockage (6) de celle-ci un tronçon longitudinal (18) du circuit d'aspiration relié au bras aspirateur articulé (9) et en une partie ouverte obturée par un couvercle longitudinal articulé (12) s'ouvrant lors du transfert de la cuve (3) de la position de travail à la position de vidange pour permettre l'évacuation des déchets et des gravats rassemblés dans le compartiment de stockage (6) et des poussières rassemblées dans le compartiment filtre (5), des organes de connexion (23, 24, 25, 26, 43) permettant de désaccoupler la cuve (3) et le circuit d'aspiration du bras aspirateur articulé (9) et des organes de pompage montés dans le compartiment machine (2) lors du déplacement de cette cuve (3) de la position de travail vers la position de vidange et de les réaccoupler lors du déplacement inverse, et la garniture filtrante (7) équipant le compartiment filtre (5) étant fermée par un couvercle de protection articulé (13) qui reste fermé lors du basculement de la cuve (3) de la position de travail vers la position de vidange.

2. Aspiratrice excavatrice conforme à la revendication 1,
**caractérisée en ce que**
le tronçon longitudinal (18) du circuit d'aspiration comporte :
- un canal de pompage des déchets et des gravats (19) branché sur le bras aspirateur articulé (9) à son extrémité arrière, et
- un canal d'aspiration d'air (20) branché sur le côté aspiration des organes de pompage, monté latéralement au voisinage du canal de pompage des déchets et des gravats (19) parallèlement à celui-ci et comportant une ouverture de sortie (34) à son extrémité avant.

3. Aspiratrice excavatrice conforme à la revendication 2,
**caractérisée en ce que**
le canal d'aspiration d'air (20) a une section essentiellement en forme de U et comporte une branche centrale (31) ainsi que deux branches latérales (32, 32') dont l'une (32) est fixée au couvercle longitudinal (12) à son extrémité pour permettre le dégagement de ce canal et l'évacuation des poussières ayant pu être entrainées avec l'air aspiré lors du basculement de la cuve (3).

4. Aspiratrice excavatrice conforme à l'une quelconque des revendications 1 à 3,
**caractérisée en ce que**
la cuve (3) présente en partie basse (4) une forme arrondie permettant de faciliter la vidange des déchets et des gravats et d'améliorer sa tenue au vide.

5. Aspiratrice excavatrice conforme à l'une quelconque des revendications 2 à 4,
**caractérisée en ce que**
le canal d'aspiration d'air (20) se prolonge dans le compartiment filtre (5) par une conduite d'aspiration (35) s'étendant de haut en bas et latéralement en avant de la cloison de séparation (28) du compartiment filtre (5) et du compartiment de stockage (6), le long de la garniture filtrante (7), puis au travers de cette garniture filtrante (7) et à la sortie de celle-ci par une chambre de collecte (36) branchée sur le côté aspiration des organes de pompage de sorte que les poussières entrainées avec l'air se rassemblent dans une chambre d'accumulation des poussières (37) située au-dessous de la garniture filtrante (7).

6. Aspiratrice excavatrice conforme à la revendication 5,
**caractérisée en ce que**
la chambre d'accumulation des poussières (37) se prolonge vers le haut, le long de la garniture filtrante (7) par un couloir de vidange (38) s'ouvrant à sa partie supérieure par une ouverture de vidange des poussières (39) de façon à permettre l'évacuation des poussières rassemblées dans cette chambre d'accumulation (37) lorsque la cuve (3) est en position de vidange.

7. Aspiratrice excavatrice conforme à la revendication 6,
**caractérisée en ce que**
le couvercle longitudinal (12) se prolonge au niveau du compartiment filtre (5) jusqu'au droit de l'ouverture de vidange des poussières (39).

8. Aspiratrice excavatrice conforme à l'une quelconque des revendications 1 à 7,
**caractérisée en ce que**
le couvercle de protection (13) est équipé d'organes de stockage d'air comprimé et de décolmatage de la garniture filtrante (7) par de l'air comprimé circulant à contre courant fourni par un compresseur d'air.

9. Aspiratrice excavatrice conforme à l'une quelconque des revendications 1 à 8,
**caractérisée en ce que**
la cuve est équipée de béquilles arrières (41), la béquille arrière (41) située à l'arrière droit étant équipée à sa partie supérieure d'un axe (42B) soudé sur celle-ci et venant s'insérer à la fin du basculement de la cuve (3) entre la position de vidange et la position de travail dans une pièce d'accrochage (42A) fixée à la partie arrière de cette cuve (3).

10. Aspiratrice excavatrice conforme à l'une quelconque des revendications 1 à 9,
**caractérisée en ce qu'**
un organe de connexion (23) mobile en rotation autour d'un axe (43) et commandé par un vérin (24) permet de déconnecter rapidement le canal de pompage des déchets et des gravats (19) et le bras articulé (9) pour permettre le basculement de la cuve (3).

## Patentansprüche

1. Saugbagger, der durch ein Trägerfahrzeug (1) gebildet wird, auf dem ein Maschinenraum (2), der mit Organen zum Pumpen von Aushub und Bauschutt versehen ist, sowie ein Behälter (3) montiert ist, wobei der Behälter (3) in einen Filterraum (5), der an den Maschinenraum (2) angrenzt und in dem ein Filtereinsatz (7) montiert ist, und in einen Lagerraum für angesaugten Aushub und Bauschutt (6), der in seinem hinteren Teil mit einem angelenkten Saugarm (9) versehen ist, der mit einem Saugkreis verbunden ist, der an der Ansaugseite der Pumporgane angeschlossen ist, unterteilt ist, und wobei dieser Behälter (3) in Querrichtung um eine horizontale Kippachse (10) kippen kann, die im Wesentlichen parallel zu seiner Längsmittelachse ist, und zwar zwischen einerseits einer aufgerichteten Position oder Arbeitsposition, in welcher der Aushub und Bauschutt angesaugt und in den Lagerraum (6) befördert werden kann, und andererseits einer gekippten Position oder Entleerungsposition, **dadurch gekennzeichnet, dass**
der obere Teil des Behälters (3) in Längsrichtung in einen geschlossenen Teil (11), unter dem im Bereich seines Lagerraums (6) ein Längsabschnitt (18) des Saugkreises montiert ist, der mit dem angelenkten Saugarm (9) verbunden ist, und in einen offenen Teil, der durch eine angelenkte Längsabdeckung (12) verschlossen wird, die sich beim Übergang des Behälters (3) von der Arbeitsposition in die Entleerungsposition öffnet, um die Entfernung des im Lagerraum (6) angesammelten Aushubs und Bauschutts und des im Filterraum (5) angesammelten Staubs zu ermöglichen, unterteilt ist, wobei Anschlussorgane (23, 24, 25, 26, 43) es ermöglichen, bei der Bewegung dieses Behälters (3) von der Arbeitsposition in die Entleerungsposition den Behälter (3) und den Saugkreis vom angelenkten Saugarm (9) und den im Maschinenraum (2) montierten Pumporganen zu entkoppeln und sie bei der umgekehrten Bewegung wieder miteinander zu koppeln, und wobei der Filtereinsatz (7), mit dem der Filterraum (5) versehen ist, durch eine angelenkte Schutzabdeckung (13) verschlossen ist, die beim Kippen des Behälters (3) von der Arbeitsposition in die Entleerungsposition geschlossen bleibt.

2. Saugbagger nach Anspruch 1,
**dadurch gekennzeichnet, dass**
der Längsabschnitt (18) des Saugkreises Folgendes umfasst:
- einen Kanal zum Pumpen des Aushubs und Bauschutts (19), der an seinem hinteren Ende an dem angelenkten Saugarm (9) angeschlossen ist, und
- einen an der Ansaugseite der Pumporgane angeschlossenen Luftansaugkanal (20), der seitlich in der Nähe des Kanals zum Pumpen des Aushubs und Bauschutts (19) parallel zu diesem montiert ist und an seinem vorderen Ende eine Auslassöffnung (34) umfasst.

3. Saugbagger nach Anspruch 2,
**dadurch gekennzeichnet, dass**
der Luftansaugkanal (20) einen im Wesentlichen U-förmigen Querschnitt aufweist und einen mittleren Ast (31) sowie zwei Seitenäste (32, 32') umfasst, von denen einer (32) an seinem Ende an der Längsabdeckung (12) befestigt ist, um das Freilegen dieses Kanals und das Entfernen des Staubs zu ermöglichen, der beim Kippen des Behälters (3) mit der angesaugten Luft mitgeführt werden konnte.

4. Saugbagger nach einem der Ansprüche 1 bis 3,
**dadurch gekennzeichnet, dass**
der Behälter (3) im unteren Teil (4) eine abgerundete Form aufweist, die es ermöglicht, das Entleeren des Aushubs und Bauschutts zu erleichtern und seine Vakuumfestigkeit zu verbessern.

5. Saugbagger nach einem der Ansprüche 2 bis 4,
**dadurch gekennzeichnet, dass**
der Luftansaugkanal (20) im Filterraum (5) durch eine Ansaugleitung (35) verlängert wird, die sich von oben nach unten und seitlich vor der Trennwand (28) des Filterraums (5) und des Lagerraums (6) entlang des Filtereinsatzes (7) und anschließend durch diesen Filtereinsatz (7) zu dessen Ausgang durch eine Auffangkammer (36) erstreckt, die an der Ansaugseite der Pumporgane angeschlossen ist, so dass sich der mit der Luft mitgeführte Staub in einer Staubsammelkammer (37) sammelt, die unter dem Filtereinsatz (7) angeordnet ist.

6. Saugbagger nach Anspruch 5,
**dadurch gekennzeichnet, dass**
die Staubsammelkammer (37) nach oben entlang des Filtereinsatzes (7) durch einen Entleerungsgang (38) verlängert wird, der sich in seinem oberen Teil durch eine Staubentleerungsöffnung (39) öffnet, um die Entfernung des in dieser Sammelkammer (37) angesammelten Staubs zu ermöglichen, wenn sich der Behälter (3) in der Entleerungsposition befindet.

7. Saugbagger nach Anspruch 6,
**dadurch gekennzeichnet, dass**
die Längsabdeckung (12) im Bereich des Filterraums (5) bis zum Ort der Staubentleerungsöffnung (39) verlängert ist.

8. Saugbagger nach einem der Ansprüche 1 bis 7,
**dadurch gekennzeichnet, dass**
die Schutzabdeckung (13) mit Organen zur Lagerung von Druckluft und zur Reinigung des Filtereinsatzes (7) durch Druckluft versehen ist, die in Gegenströmung zirkuliert und durch einen Luftverdichter bereitgestellt wird.

9. Saugbagger nach einem der Ansprüche 1 bis 8,
**dadurch gekennzeichnet, dass**
der Behälter mit hinteren Stützen (41) versehen ist, wobei die hinten rechts angeordnete hintere Stütze (41) an ihrem oberen Teil mit einer Achse (42B) versehen ist, die an sie geschweißt ist und die am Ende der Kippbewegung des Behälters (3) zwischen der Entleerungsposition und der Arbeitsposition in ein Rastteil (42A) eingefügt wird, das am hinteren Teil dieses Behälters (3) befestigt ist.

10. Saugbagger nach einem der Ansprüche 1 bis 9,
**dadurch gekennzeichnet, dass**
ein Anschlussorgan (23), das um eine Achse (43) drehbeweglich ist und durch einen Zylinder (24) gesteuert wird, es ermöglicht, den Kanal zum Pumpen des Aushubs und Bauschutts (19) und den angelenkten Arm (9) rasch voneinander zu trennen, um das Kippen des Behälters (3) zu ermöglichen.

## Claims

1. Suction excavator consisting of a carrier vehicle (1) on which are mounted an engine compartment (2) equipped with waste and rubble pumping means and a tank (3) subdivided into a filter compartment (5) adjacent to the engine compartment (2), in which is mounted a filtration unit (7), and a compartment for the storage of sucked-up waste and rubble (6), equipped in its rear part with an articulated suction arm (9) linked to a suction circuit connected on the suction side of the pumping means, said tank (3) being capable of tilting transversely about a horizontal tilting axis (10) essentially parallel to its median longitudinal axis between, on the one hand, an upright or working position in which the waste and rubble can be sucked up and transferred into the storage compartment (6), and, on the other hand, a tilted or emptying position, **characterised in that** the upper part of the tank (3) is divided longitudinally into a closed part (11) below which is mounted, at the level of the storage compartment (6) of the same, a longitudinal section (18) of the suction circuit linked to the articulated suction arm (9) and an open part blocked by an articulated longitudinal cover (12) which opens during the movement of the tank (3) from the working position to the emptying position in order to allow the evacuation of waste and rubble collected in the storage compartment (6) and dust collected in the filter compartment (5), connecting means (23, 24, 25, 26, 43) for disconnecting the tank (3) and the suction circuit from the articulated suction arm (9) and the pumping means mounted in the engine compartment (2) when said tank (3) is moved from the working position to the emptying position and for reconnecting the same when the reverse movement is performed, and the filtration unit (7) provided in the filter compartment (5) being closed by an articulated protective cover (13) which remains closed during the tilting of the tank (3) from the working position to the emptying position.

2. Suction excavator according to claim 1, **characterised in that**
the longitudinal section (18) of the suction circuit comprises:
- a waste and rubble pumping channel (19) connected to the articulated suction arm (9) at its rear extremity, and
- an air suction channel (20) connected to the suction side of the pumping means, mounted laterally in the vicinity of the waste and rubble pumping channel (19), parallel to the same and comprising an outlet opening (34) at its forward extremity.

3. Suction excavator according to claim 2,
**characterised in that**
the air suction channel (20) has an essentially U-shaped cross-section and comprises a central branch (31) and two lateral branches (32, 32'), of which one (32) is fixed to the longitudinal cover (12) at its extremity in order to allow the disconnection of said channel and the evacuation of any dust that may have been carried with the sucked air during the tilting of the tank (3).

4. Suction excavator according to any one of claims 1 to 3,
**characterised in that**
the lower part (4) of the tank (3) has a rounded shape to facilitate the emptying of the waste and rubble and to improve its behaviour when empty.

5. Suction excavator according to any one of claims 2 to 4,
**characterised in that**
the air suction channel (20) extends into the filter compartment (5) via a suction duct (35) extending vertically downwards and laterally in front of the separating wall (28) of the filter compartment (5) and the storage compartment (6), along the filtration unit (7), then through said filtration unit (7) and to the outlet of the same via a collection chamber (36) connected to the suction side of the pumping means so that the dust carried with the air is collected in a dust accumulation chamber (37) situated beneath the filtration unit (7).

6. Suction excavator according to claim 5,
**characterised in that**
the dust accumulation chamber (37) extends upwards, along the filtration unit (7) through an emptying corridor (38) opening on its upper part through a dust emptying aperture (39) in such a way as to allow the evacuation of the dust collected in said accumulation chamber (37) when the tank (3) is in the emptying position.

7. Suction excavator according to claim 6, **characterised in that**
the longitudinal cover (12) extends at the level of the filter compartment (5) as far as the right-hand side of the dust emptying aperture (39).

8. Suction excavator according to any one of claims 1 to 7,
**characterised in that**
the protective cover (13) is equipped with means for storing compressed air and for unblocking the filtration unit (7) with compressed air circulating against the flow, supplied by an air compressor.

9. Suction excavator according to any one of claims 1 to 8,
**characterised in that**
the tank is provided with rear support legs (41), the support leg (41) situated at the right rear being provided on its upper part with a pin (42B) welded to the same and intended to be inserted, at the end of the tilting of the tank (3) between the emptying position and the working position, into a latching member (42A) fixed to the rear part of said tank (3).

10. Suction excavator according to any one of claims 1 to 9,
**characterised in that**
a connecting member (23) rotatable about an axis (43) and actuated by a hydraulic jack (24) allows rapid disconnection of the waste and rubble pumping channel (19) and the articulated arm (9) in order to allow the tilting of the tank (3).
